# EUROPEAN PATENT SPECIFICATION

(11) **EP 4 056 146 B1**
(45) Date of publication and mention of the grant of the patent: **08.07.2026**
(21) Application number: 21177447.6
(22) Date of filing: 02.06.2021
(51) Int. Cl.: A61C 17/02

(54) **AIR-WATER SYRINGE**
LUFT-WASSER-SPRITZHANDSTÜCK
SERINGUE À AIR ET À EAU

(30) Priority: 08.03.2021 US 202117194805
(43) Date of publication of application: 14.09.2022
(73) Proprietor: Medicom Group Inc., Pointe-Claire, Québec H9P 2Z2 (CA)
(72) Inventor: Kwong, F. S., Sham Shui Po, Kowloon Hong Kong SAR (CN); Tam, W.Y., Tung Chung Lantau Island N. T. Hong Kong SAR (CN)
(74) Representative: BSB Patentanwälte Schütte & Engelen Partnerschaft mbB

(56) References cited:
- EP-A1- 2 579 803
- GB-A- 941 332
- US-A- 4 149 315
- US-A1- 2020 290 066

## Description

### TECHNICAL FIELD

The present invention relates to the field of air-water syringes.

### BACKGROUND

Current air-water syringes on the market are known to allow a dentist to irrigate and dry the mouth on every patient for every procedure. These known devices are configured and operate in different ways. The device disclosed and claimed provides a novel, more efficient and easier to operate disposable air-water syringe design.

GB 941 332 A discloses a dental spaying device. US 4 149 315 A shows a dental syringe conectible to sources of air and water under pressure. EP 2 579 803 A1 discloses and improved dental nozzle.

### SUMMARY

An air-water syringe according to the invention is defined in the appended claims. It comprises a cylinder with an inlet end and an outlet end. It further comprises a minimum of 1 water channel traversing the cylinder from the inlet end to the outlet end and a minimum of 1 air channel traversing the cylinder from the inlet end to the outlet end. A minimum of 2 guide vanes at an end of the air channel located at the outlet end of the cylinder are provided. The two or more guide vanes are configured to divide the air channel into two or more outlets. The air-water syringe was manufactured in one piece.

In a preferred embodiment of the air-water syringe the minimum of 1 air channel preferably encompasses an entire (or at least almost an entire) inner circumference of the minimum of 1 channel from the inlet end of the cylinder to the minimum of 2 guide vanes at the outlet end of the cylinder. In this configuration and in other preferred embodiments the minimum of 1 air channel is preferably diverted by the minimum of 2 guide vanes to exit the air-water syringe in three outlets. In preferred embodiments an inclination of the minimum of 2 guide vanes is between a range of 46° and 28°. In this embodiment and other embodiments the air-water syringe may further comprise a flexible section of the air-water syringe.

In all embodiments it is preferred that the air-water syringe further comprises a flexible section of the air-water syringe.

In all configurations a preferred material used is polypropylene.

In preferred and advantageous embodiments the air-water syringe further comprises a finger grip.

It is preferred that the minimum of 1 air channel is diverted by the minimum of 2 guide vanes to exit the air-water syringe in three outlets.

Disclosed are dental nozzle devices or air-water single piece syringes which include a double tube design. The water channel is surrounded by an air channel at the inlet of the device. The single air channel is then divided into 3 air outlets by ways of the guide vanes at the tip end of the device. The spray angle and shape of the guide vane allow for spiral and conical spray angle and micro fine mist. The flexible band area allows dentist to adjust angle of device without affecting the water and air flow.

### BRIEF DESCRIPTION OF THE DRAWINGS

For a better understanding of the embodiments described herein and to show more clearly how they may be carried into effect, reference will now be made, by way of example only, to the following drawings.
Figure 1 illustrates a perspective of the air-water syringe device for the adaptor model.
Figure 2 depicts a perspective for a slim model of the air-water syringe device.
Figure 3 illustrates the side view of the air-water syringe device.
Figure 4 illustrates cross section C-C of Figure 3 for the outlet of the air-water syringe device.
Figure 5 illustrates cross section A-A of Figure 3 showing the inside cylinder body.
Figure 6 illustrates cross section B-B of Figure 3 for the inlet of the air-water syringe device.
Figure 7 illustrates a blown-up view of the outlet of cross section C-C of Figure 3 for the outlet of the air-water syringe device.

It will be appreciated that for simplicity and clarity of illustration, elements shown in the figures have not necessarily been drawn to scale. For example, the dimensions of some of the elements may be exaggerated relative to other elements for clarity.

### Parts List

Single piece syringe design containing:
1. Body Cylinder
2. Water Channel
3. Air Channel
4. Water outlet
5. Guide vane
6. Water inlet
7. Finger grip (on adaptor design)
8. Flexible section
9. Air Inlet
10. Air Outlet
11. Inlet End
12. Outlet/Tip End

### DETAILED DESCRIPTION

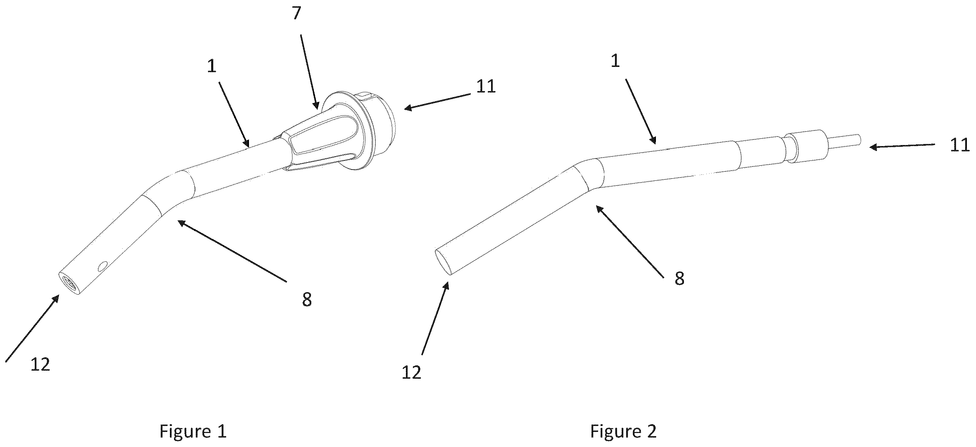

As depicted on Figure 1 the air-water syringe device for the adaptor model includes the body cylinder (1) extending from the inlet end (11) to the outlet/tip end (12) with the finger grip (7), and a flexible section (8) on the body cylinder (1). Figure 2 depicts a perspective for a slim model of the air-water syringe device. The working principal is the same for the adaptor and the slim version. The only difference is they are designed to fit with a different model of handpiece. The adaptor type requires a connector between the handpiece and the air-water syringe. The direction for use is to plug and lock to the handpiece by user.

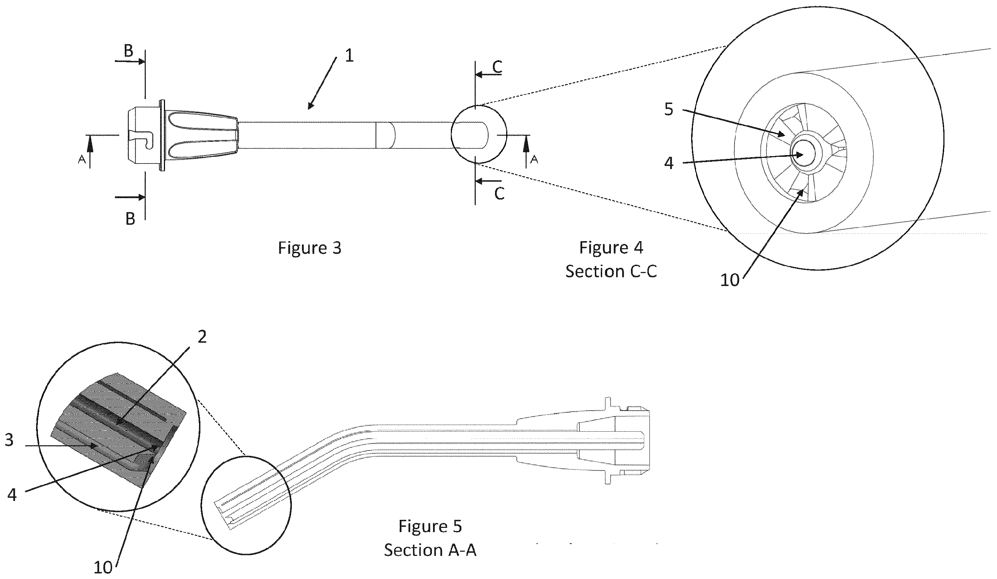

Figure 3 illustrates the side view of the air-water syringe device. The air-water syringe device shown on Figure 4, 5 and 6 depicts the inside configuration. Figure 4 illustrates cross section C-C of Figure 3 for the outlet of the air-water syringe device including the water outlet (4), the guide vanes (5) and the air outlet (10). Figure 5 illustrates cross section A-A of Figure 3 showing the inside cylinder body with the water channel (2), air channel (3,) water outlet (4), and air outlet 10).

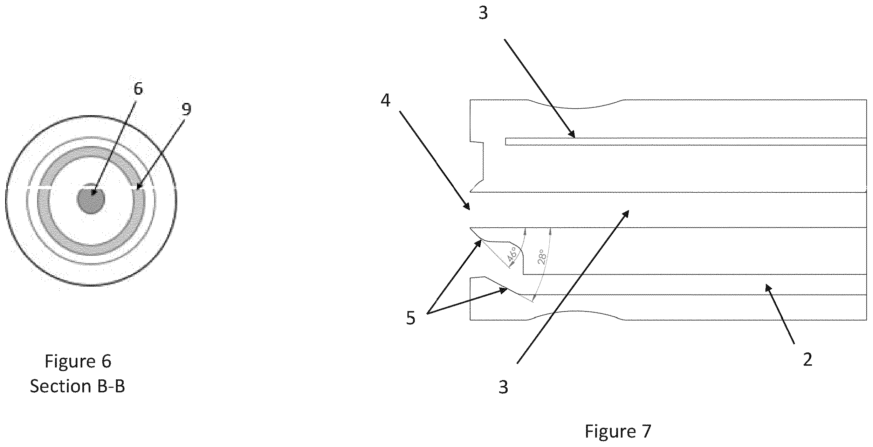

Figure 6 illustrates cross section B-B of Figure 3 for the inlet of the air-water syringe device depicting the water inlet (6) and the air inlet (9). The water channel (2) reaches the tip of the device with one water outlet (4). The air flow gets separated into 3 outlets (10) at the tip end (12) of the device by way of the guide vanes (5). As shown on the figure the air channel (3) starts at the air inlet (9) encompassing the whole inner circumference of the channel from the inlet end of the cylinder to the guide vanes at the vanes at the air outlet. At the air outlet (10) the air in the air channel (3) is diverted by the guide vanes (5) to exit in three outlets (10) at the tip end (12) of the device. The device is not limited to requiring exactly 3 air outlets and 1 water inner tube (2). The device can have a multiple channels/tubes for the air and for the water.

Figure 7 illustrates a blown-up view of the outlet of cross section C-C of Figure 3 for the outlet of the air-water syringe device. It shows the spray angles of 46° and 28° as well as the guide vanes (5) of the device to precisely control air and water mist. These angles and inclination of the guide vanes (5) were chosen during the design of experiment for the best spray effect. The device is not limited to have these angles; any angles or guide vane inclination in the range of 46° and 28° can also be applied to this device.

The device can be manufactured in one piece using injection molding and as such, there is no assembly. In one embodiment the material used is white polypropylene (PP SM498) and the texture is smooth. But the material used, the color, and the finish can be selected according to particular requirements and preference.

The disclosed multichannel syringe is primarily for dental applications utilizing air and water. But the multichannel design can be adapted for use in other applications and with other types of gas and liquid.

Figure 1 and 2 also shows the flexible section (8). One method to achieve flexible bending is to add an additional step following the injection molding and before the material has cooled. The device is bent to an adjustable angle. The flexibility comes from the Polypropylenes physical properties and its temperature after injection molding but before completely cooling off.

Disclosed is an air- water syringe comprising: a cylinder with an inlet end and an outlet end; a minimum of 1 water channel traversing from the inlet end to the outlet end; a minimum of 1 air channel traversing from the inlet end to the outlet end; and a minimum of 2 guide vanes at an end of the air channel located at the outlet end of the cylinder.

In one embodiment the air- water syringe the air channel encompasses the entire inner circumference of the channel from the inlet end of the cylinder to the minimum of 2 guide vanes at the outlet end of the cylinder.

A disclosed embodiment for the air- water syringe can include the minimum of 1 air channel which is diverted by the guide vanes to exit in three outlets.

Having described preferred embodiments which serve to illustrate various concepts, structures and techniques which are the subject of this patent, it will now become apparent to those of ordinary skill in the art that other embodiments incorporating these concepts, structures and techniques may be used. Accordingly, it is submitted that that scope of the patent should not be limited to the described embodiments but rather should be limited only by the scope of the following claims.

## Claims

1. An air-water syringe comprising:
a cylinder (1) with an inlet end (11) and an outlet end (12);
a water channel (2) traversing the cylinder (1) from the inlet end (11) to the outlet end (12);
an air channel (3) traversing the cylinder (1) from the inlet end (11) to the outlet end (12); and
two or more guide vanes (5) at an end of the air channel (3) located at the outlet end (12) of the cylinder, wherein the two or more guide vanes (5) are configured to divide the air channel into two or more outlets (10), **characterized in that** the air-water syringe was manufactured in one piece.

2. The air-water syringe according to Claim 1 wherein the air channel encompasses an entire inner circumference of the cylinder from the inlet end of the cylinder to the two or more guide vanes at the outlet end of the cylinder.

3. The air-water syringe according to Claim 1 or 2 wherein the air channel is diverted by the minimum of two or more guide vanes to exit the air-water syringe in three outlets.

4. The air-water syringe according to any of the preceding claims wherein an inclination of the minimum of two or more guide vanes is between a range of 46° and 28°.

5. The air-water syringe according to any one of the preceding claims, wherein the cylinder comprises a flexible section (8).

6. The air-water syringe according to any one of the preceding claims, wherein the cylinder comprises polypropylene.

7. The air-water syringe according to any one of the preceding claims further comprising a finger grip (7).

8. The air-water syringe according to any one of the preceding claims, wherein the two or more guide vanes are configured to divert air in the air channel to exit the air-water syringe in three outlets (10).

9. The air-water syringe according to any of the preceding claims further comprising a flexible section of the air-water syringe.

10. The air-water syringe according to any one of claims 1-8, wherein the two or more outlets comprise three or more outlets, and the two or more guide vanes comprise three or more guide vanes configured to divide the air channel into more than three outlets

## Patentansprüche

1. Luft-Wasser-Spritze, umfassend:
einen Zylinder (1) mit einem Einlassende (11) und einem Auslassende (12);
einen Wasserkanal (2), der den Zylinder (1) von dem Einlassende (11) zu dem Auslassende (12) durchzieht;
einen Luftkanal (3), der den Zylinder (1) von dem Einlassende (11) zu dem Auslassende (12) durchzieht; und
zwei oder mehr Führungsschaufeln (5) an einem Ende des Luftkanals (3), das sich an dem Auslassende (12) des Zylinders befindet, wobei die zwei oder mehr Führungsschaufeln (5) ausgelegt sind, um den Luftkanal in zwei oder mehr Auslässe (10) zu unterteilen,
**dadurch gekennzeichnet, dass** die Luft-Wasser-Spritze einstückig hergestellt ist.

2. Luft-Wasser-Spritze nach Anspruch 1, wobei der Luftkanal einen gesamten Innenumfang des Zylinders von dem Einlassende des Zylinders bis zu den zwei oder mehr Führungsschaufeln an dem Auslassende des Zylinders umschließt.

3. Luft-Wasser-Spritze nach Anspruch 1 oder 2, wobei der Luftkanal durch die mindestens zwei oder mehr Führungsschaufeln umgeleitet wird, um die Luft-Wasser-Spritze über drei Auslässe zu verlassen.

4. Luft-Wasser-Spritze nach einem der vorhergehenden Ansprüche, wobei eine Neigung der mindestens zwei oder mehr Führungsschaufeln zwischen einem Bereich von 46° und 28° liegt.

5. Luft-Wasser-Spritze nach einem der vorhergehenden Ansprüche, wobei der Zylinder einen flexiblen Abschnitt (8) umfasst.

6. Luft-Wasser-Spritze nach einem der vorhergehenden Ansprüche, wobei der Zylinder Polypropylen umfasst.

7. Luft-Wasser-Spritze nach einem der vorhergehenden Ansprüche, ferner umfassend einen Fingergriff (7).

8. Luft-Wasser-Spritze nach einem der vorhergehenden Ansprüche, wobei die zwei oder mehr Führungsschaufeln ausgelegt sind, um Luft in dem Luftkanal so umzuleiten, dass sie die Luft-Wasser-Spritze über drei Auslässe (10) verlässt.

9. Luft-Wasser-Spritze nach einem der vorhergehenden Ansprüche, ferner umfassend einen flexiblen Abschnitt der Luft-Wasser-Spritze.

10. Luft-Wasser-Spritze nach einem der Ansprüche 1-8, wobei die zwei oder mehr Auslässe drei oder mehr Auslässe umfassen und die zwei oder mehr Führungsschaufeln drei oder mehr Führungsschaufeln umfassen, die ausgelegt sind, um den Luftkanal in mehr als drei Auslässe zu unterteilen.

## Revendications

1. Seringue air-eau comprenant :
un cylindre (1) avec une extrémité d'entrée (11) et une extrémité de sortie (12) ;
un canal d'eau (2) traversant le cylindre (1) de l'extrémité d'entrée (11) à l'extrémité de sortie (12) ;
un canal d'air (3) traversant le cylindre (1) de l'extrémité d'entrée (11) à l'extrémité de sortie (12) ; et
deux ou plusieurs ailettes directrices (5) situées à l'extrémité de sortie du canal d'air (3) située à l'extrémité de sortie (12) du cylindre, les deux ou plusieurs ailettes directrices (5) étant configurées pour diviser le canal d'air en deux ou plusieurs sorties (10), **caractérisée en ce que** la seringue air-eau a été fabriquée en une seule pièce.

2. Seringue air-eau selon la revendication 1, dans laquelle le canal d'air englobe toute une circonférence intérieure du cylindre depuis l'extrémité d'entrée du cylindre jusqu'aux deux ailettes directrices ou plus à l'extrémité de sortie du cylindre.

3. Seringue air-eau selon la revendication 1 ou 2, dans laquelle le canal d'air est dévié par le minimum de deux ailettes de guidage ou plus pour sortir de la seringue air-eau par trois sorties.

4. Seringue air-eau selon l'une quelconque des revendications précédentes, dans laquelle une inclinaison du minimum de deux ailettes de guidage ou plus est comprise entre 46° et 28°.

5. Seringue air-eau selon l'une quelconque des revendications précédentes, dans laquelle le cylindre comprend une section flexible (8).

6. Seringue air-eau selon l'une quelconque des revendications précédentes, dans laquelle le cylindre comprend du polypropylène.

7. Seringue air-eau selon l'une quelconque des revendications précédentes, comprenant en outre une poignée pour les doigts (7).

8. Seringue air-eau selon l'une quelconque des revendications précédentes, dans laquelle les deux ailettes de guidage ou plus sont configurées pour dévier l'air dans le canal d'air pour sortir de la seringue air-eau par trois sorties (10).

9. Seringue air-eau selon l'une quelconque des revendications précédentes, comprenant en outre une section flexible de la seringue air-eau.

10. Seringue air-eau selon l'une quelconque des revendications 1 à 8, dans laquelle les deux sorties ou plus comprennent trois sorties ou plus, et les deux ailettes de guidage ou plus comprennent trois ailettes de guidage ou plus configurées pour diviser le canal d'air en plus de trois sorties.
